# EUROPEAN PATENT APPLICATION

(11) **EP 4 064 178 A1**
(43) Date of publication of application: **28.09.2022**
(21) Application number: 21164280.6
(22) Date of filing: 23.03.2021
(51) Int. Cl.: G06T 5/00, G06T 11/00

(54) **TRANSFERING A MODALITY-SPECIFIC IMAGE CHARACTERSTIC TO A COMMON REFERENCE IMAGE CHARACTERISTIC**

(71) Applicant: Koninklijke Philips N.V., 5656 AG Eindhoven (NL)
(72) Inventor: MAACK, Hanns-Ingo, 5656 AE Eindhoven (NL); YAROSHENKO, Andriy, 5656 AE Eindhoven (NL); WIEBERNEIT, Nataly, 5656 AE Eindhoven (NL)
(74) Representative: Philips Intellectual Property & Standards

(57) **Abstract**

It is provided a method, configured to modify medical image data acquired by different modalities of a same medical imaging technology to look more like a common reference. The method comprises:
obtaining (S1), by a data processing unit (162), first medical image data (20a) acquired by a first modality (12a) of a medical imaging technology, wherein using the first modality (12a) of the medical imaging technology is associated with at least one modality-specific image characteristic of the first medical image data (20a) at least co-determining an image visualization to a user;
identifying (S2), by the data processing unit (162), the first modality of the medical imaging technology, and determining, by the data processing unit (162), based on the identified first modality (12a) of the medical imaging technology, a first transfer rule (22a) configured to transfer the at least one image characteristic towards a common reference image characteristic associated with a common reference image visualization;
generating (S3), by the data processing unit (162), second medical image data (24a), by processing the first medical image data (20a) with the first transfer rule (22a); and providing (S4), by the data processing unit (162), the second medical image data (24a) to be displayed to a user.

## Description

### FIELD OF THE INVENTION

The invention relates to a method for providing medical imaging data. Further, the invention relates to a device for providing medical imaging data, a system comprising the device, and a computer program element.

### BACKGROUND OF THE INVENTION

Within a medical imaging facility, such as a radiology department, a hospital, or the like, there may be medical imaging devices or systems, i.e. modalities, using a same medical imaging technology, such as X-ray, CT, MRT, or the like. These modalities may differ in terms of its vendor, a release version, a post-processing configuration, etc.

As a result, medical image data acquired by using a first modality may have an image visualization different to the medical image data acquired by using a second modality, although the first and second modalities utilize the same medical imaging technology. This causes a reader of the medical image data, e.g. a radiologist, to deal with different visualizations of the images during image evaluation. This complicates the evaluation of images, especially when dealing with longitudinal imaging, as the visualization may be misleading to the reader. Further, the post-processing means of the modality may be out-of-date, so the evaluation of images may be performed on the basis of suboptimal image quality.

### SUMMARY OF THE INVENTION

There may, therefore, be a need for improving image processing to deal with different modalities. The object of the present invention is solved by the subject matter of the independent claims, wherein further embodiments are incorporated in the dependent claims.

According to a first aspect, there is provided a method for providing medical imaging data. The method comprises the steps of:
obtaining, by a data processing unit, first medical image data acquired by a first modality of a medical imaging technology, wherein using the first modality of the medical imaging technology is associated with at least one modality-specific image characteristic of the first medical image data at least co-determining an image visualization to a user;
identifying, by the data processing unit, the first modality of the medical imaging technology, and determining, by the data processing unit, based on the identified first modality of the medical imaging technology, a first transfer rule configured to transfer the at least one image characteristic towards a common reference image characteristic associated with a common reference;
generating, by the data processing unit, second medical image data, by processing the first medical image data with the first transfer rule; and
providing, by the data processing unit, the second medical image data to be displayed to a user.

In other words, modality-specific image (post-)processing is followed by image-characteristic adjusting, further image (post-processing), wherein the latter is achieved by processing the first medical image data with the first transfer rule.

In this way, image visualization, i.e. image impression, image appearance, image style, etc., of the medical image data may be modified to look more like the common reference. In other words, the method allows to adapt one or more image characteristics to a reference that is common to a number, e.g. two or more, of modalities, wherein each one of the medical image data of the number of modalities looks more like the common reference. That is, regardless of the modality with which the first image data is or was acquired, the image visualization, i.e. image appearance, of the second medical image data, due to using the same common reference, is at least similar. This allows to provide, e.g. display, the medical image data in a manner visually adapted to the common reference to a reader, e.g. a radiologist. Therefore, evaluation of medical images may be facilitated, and may be less misleading. Further, this allows to provide, store, etc., medical image data with an up-to-date image (post-)processing, further allowing to store and/or archive medical image data with improved image characteristics.

As used herein, the first modality may be broadly understood as a specific medical imaging device using medical imaging technology, such as X-ray, CT, MRT, or the like. Further, the first modality may be understood as a vendor-specific medical imaging device. Thereby, the first modality may be assigned to a vendor A, while a second modality may be assigned to a vendor B different to the vendor A, a third modality may be assigned to a vendor C different to the vendor A and the vendor B, and so forth. Alternatively or additionally, the first modality may also refer to a specific type, version, generation, an age, or the like, of a specific medical imaging device. The first modality may comprise one or more parameters of an image post-processing means, e.g. algorithm, differing from vendor to vendor, type to type and/or version to version of the specific medical imaging device.

The common reference may be provided as medical image data, as a parameter data set, or the like. It may also be referred to as a master or a master image. For example, the common reference may be provided in the Digital Imaging and Communications in Medicine (DICOM) format, or any other suitable format. This is not limited herein.

It is noted that both the first medical image data and the second medical image data may be displayed to the user at each method step.

Further, it is noted that the present description mainly refers to the first modality, however, the described process steps and/or functions are just as applicable to a second, third, fourth, etc., modality, although these may differ from each other. In particular, the present method allows for different modalities to have a common reference for the image visualization or image appearance to a user.

According to an embodiment, the first modality of the medical imaging technology and/or the first transfer rule may be vendor specific. In other words, for each different vendor A, B, C, D, etc., there may be a specific transfer rule, as far as there are on or more parameters of e.g. an image post-processing means differing among the different vendors. The transfer rule can be set once at initial setup or updated on an ongoing basis by creating a rule set from an analysis of differences of the at least one image characteristic compared to the common reference image characteristic to match the at least one image characteristic to the common reference image characteristic. This allows image characteristics to be adjusted to the common reference based on the identification of a vendor alone.

In an embodiment, identifying the first modality may further comprise:
extracting a modality identifier from meta data of the first medical image data.

For example, the first medical image data may be provided, e.g. exchanged, in a Digital Imaging and Communications in Medicine (DICOM) format, or in any other suitable data format. The meta data of the first medical image data may comprise at least one data field comprising information configured to identify a specific vendor of the medical imaging device and/or to derive imaging parameters used for acquisition of the first medical image data. By extracting and/or reading the information, the modality identifier may be obtained, and used, for example, to determine the first transfer rule. For the latter, a database, a lookup table, or the like, may be utilized, comprising a correspondence between the modality identifier and the transfer rule.

According to an embodiment, wherein the at least one image characteristic comprises one or more of a color, a sharpness, a contrast, a noise behavior, a frequency domain, an image histogram, and a grey value representation of the first medical image data or parts of it. This is not limited in this description. By modifying one or more of the above image characteristics, the visualization of the first medical image data may be modified, and by applying the corresponding transfer rule the visualization may match the common reference image characteristic.

In an embodiment, the first transfer rule may comprise a set of transfer parameters configured to modify one or more of a color, a sharpness, a contrast, a noise behavior, a frequency domain, and a grey value representation of the first medical image data or parts of it, in order to transfer the at least one image characteristic towards the common reference image characteristic.

For determining the transfer rule and/or the set of transfer parameters, the data processing unit may perform an image analysis, an image characteristic transformation, etc. For example, the data processing unit may determine key values k_{1_1}, k_{2_1}, k_{1_2}, k_{2_2} from the first medical image data and the common reference, e.g. by using a histogram, or the like, in particular two key values k_{1_1}, k_{2_1} for the first medical image data and two key values k_{1_2}, k_{2_2} for the common reference. The key values k_{1_1} and k_{1_2} may be 20% percentile of the respective histogram and the key values k_{2_1} and k2_{_2} may be 80% percentile of the respective histogram.

From the key values k_{1_1}, k₂_₁, k_{1_2}, k_{2_2} the data processing unit may determine values g_{1_1}, g_{2_1}, g_{1_2}, g_{2_2}, associated with the at least one image characteristic.

For example, if a color of the first medical image data 20a, 20b is to be transferred to the common reference, the value g_{1_1} is the grey scale value at k_{1_1} and the color value g_{2_1} is the grey scale value at k₂_₁ from the first medical image data. The color value g_{1_2} is the grey scale value at k_{1_2} and the color value g_{2_2} is the grey scale value at k_{2_2} from the first medical image data. The color values g_{1_1}, g_{2_1}, g_{1_2}, g_{2_2} may be different.

From the color values g_{1_1}, g_{2_1}, g_{1_2}, g_{2_2} a color transformation in the form of a look-up table (LUT) may be generated by the data processing unit. The color transformation may be a linear transformation with the properties that g_{1_1} = LUT [g_{1_2}] and g_{2_1} = LUT [g_{2_2}], in such a way, the color values g_{1_2}, g_{2_2} of the common reference are mapped to the respective color values g_{1_1}, g_{2_1} of the first medical image data.

Optionally, the image characteristic transformation is a pixel wise transformation.

Further, this approach may also be applied in a similar or the same manner to a sharpness, a contrast, a noise behavior, a frequency domain, and a grey value representation of the first medical image data 20a, 20b or parts of it.

Optionally, the data processing unit 162 may be configured to analyze a number of first medical image data 20a each acquired by the first modality 12a, and to determine the at least one image characteristic for each one of the number of first medical image data 20a. Further, the data processing unit 162 may be configured to determine, for each one of the number of first medical image data 12a, a difference between the corresponding one at least one image characteristic and the common reference image characteristic. Then, based on the determined difference, the data processing unit 162 may determine an individual set of transfer parameters for the first transfer rule 20a for each one of the number of medical image data 20a, wherein the individual set of transfer parameters is configured to transfer the corresponding one of the at least one image characteristic of the number of first medical image data 20a towards the common reference image characteristic.

For example, the number of first medical image data 12a may be in the range of 2 to 10, and may preferably be five. For each one of the number of first medical image data, also a number of the individual set of transfer parameters may be generated, providing n x n individual sets of transfer parameters. By way of example, 5 x 5 individual sets of transfer parameters may be generated. These individual sets of transfer parameters may be collected in a data set.

Further optionally, the data processing unit 162 may be configured to determine an average or a median of the individual sets of transfer parameters, and to generate the first transfer rule 22a to be specific for the first modality 12a, based on the determined average or median.

Likewise, optionally, the data processing unit 162 may be configured to analyze a number of another first medical image data 20b each acquired by the second modality 12b, and to determine the at least one image characteristic for each one of the number of first medical image data 20b. Further, the data processing unit 162 may be configured to determine, for each one of the number of first medical image data 12b, a difference between the corresponding one at least one image characteristic and the common reference image characteristic. Then, based on the determined difference, the data processing unit 162 may determine an individual set of transfer parameters for the second transfer rule 20b for each one of the number of medical image data 20b, wherein the individual set of transfer parameters is configured to transfer the corresponding one of the at least one image characteristic of the number of first medical image data 20b towards the common reference image characteristic.

For example, the number of first medical image data 12b may be in the range of 2 to 10, and may preferably be five. For each one of the number of first medical image data, also a number of the individual set of transfer parameters may be generated, providing n x n individual sets of transfer parameters. By way of example, 5 x 5 individual sets of transfer parameters may be generated. These individual sets of transfer parameters may be collected in a data set.

Further optionally, the data processing unit 162 may be configured to determine an average or a median of the individual sets of transfer parameters, and to generate the second transfer rule 22b to be specific for the second modality 12b, based on the determined average or median.

Optionally, the first transfer rule 22a is predefined for the first modality 12a. Thereby, the data processing unit 162 may be configured to determine the first transfer rule 22a by searching, within a data source, e.g. a database, a look-up table, or the like, the first transfer rule 22a assigned to the first modality 12a, based on the identified first modality.

Likewise, optionally, the second transfer rule 22b is predefined for the second modality 12b. Thereby, the data processing unit 162 may be configured to determine the second transfer rule 22b by searching, within a data source, e.g. a database, a look-up table, or the like, the second transfer rule 22b assigned to the second modality 12b, based on the identified first modality.

For example, once generated the first transfer rule 22a, or any further second, third, etc. transfer rule, it may be stored in the data source, e.g. in a database, look-up table, etc. The data processing unit 162 may carry out the search within the data source, wherein e.g. an identifier of the first modality may be used as a search criteria.

In other words, there may be provided a number of modalities, each of which may have its own transfer rule assigned to it and used to generate the corresponding second medical image data. Thereby, each one of the number of modalities may be matched with the common reference by applying the corresponding transfer rule. In this way, regardless of the modality with which the first image data was acquired, the visualization, i.e. appearance, of the second medical image data, for the generation of which the same common reference is used, is at least similar.

In an embodiment, the first medical image data may be obtained from an image database, preferably from a picture archiving and communication system, PACS, and wherein the second medical image data is provided to the PACS.

According to another embodiment, the first medical image data may be obtained from the first modality, and then processed with the first transfer rule to generate the second medical image data, and wherein the second medical image data is provided to an image database, preferably a picture archiving and communication system, PACS. In other words, the method may be applied after image acquisition and before providing the acquired image to the PACS. It may be configured whether the original image, i.e. the first medical image data, the modified image, i.e. the second medical image data, or both, the original image and the modified image, are to be provided to the image database.

In an embodiment, the method may be applied to a server arranged between the first modality and an image database, preferably a picture archiving and communication system, PACS.

According to an embodiment, the second medical image data may be obtained from an image database, preferably a picture archiving and communication system, PACS. The obtained second medical image data may be processed with the first transfer rule to generate the second medical image data with the first transfer rule, or a n-th transfer rule, etc. Then, the processed second medical image data may be provided to the image database. According to a second aspect, there is provided a device for providing medical imaging data, comprising:
a data processing unit; and
at least one data interface; operatively connected to the data processing unit and configured to receive and/or transmit medical image data;
wherein the data processing unit is configured to:
   obtain first medical image data acquired by a first modality of a medical imaging technology, wherein using the first modality of the medical imaging technology is associated with at least one modality-specific image characteristic of the first medical image data at least co-determining an image visualization to a user;
   identify the first modality of the medical imaging technology, and determining, by the data processing unit, based on the identified first modality of the medical imaging technology, a first transfer rule configured to transfer the at least one image characteristic towards a common reference image characteristic associated with a common reference;
   generate second medical image data, by processing the first medical image data with the first transfer rule; and
   provide the second medical image data to be displayed to a user.

The device may be a server connected to a data network, a workstation connected to a data network, or may be integrated into an existing medical image management system, such as the PACS.

This allows to provide, e.g. display, the medical image data in a manner optically adapted to the common reference to a reader, e.g. a radiologist. Therefore, evaluation of medical images may be facilitated, and may be less misleading. Further, this allows to provide, store, etc., medical image data with an up-to-date image (post-)processing, further allowing to store and/or archive medical image data with improved image characteristics.

According to a third aspect, there is provided a medical imaging system for providing medical imaging data, comprising:
at least a first modality of a medical imaging technology;
an image database; and
a device according to the second aspect.

The first modality may be a medical imaging device of a first type, a first version, etc., and/or may be a medical imaging device of a specific vendor. The first modality may use a first image post-processing means, e.g. algorithm, causing the first medical image data to have a specific image characteristic.

The first modality, the image database, and/or the device may be connected to each other to exchange data, e.g. via a data network, communications network, etc.

According to a fourth aspect, there is provided a computer program element, which when executed by a processor is configured to carry out the method according to the first aspect, and/or to control a device according to the second aspect, and/or to control a system according to the third aspect.

According to a fifth aspect, there is provided a computer-readable storage or transmission medium, which has stored or which carries the computer program element according to the fourth aspect.

It is noted that the above embodiments may be combined with each other irrespective of the aspect involved. Accordingly, the method may be combined with structural features of the device and/or system of the other aspects and, likewise, the device and the system may be combined with features of each other, and may also be combined with features described above with regard to the method.

These and other aspects of the present invention will become apparent from and elucidated with reference to the embodiments described hereinafter.

### BRIEF DESCRIPTION OF THE DRAWINGS

Exemplary embodiments of the invention will be described in the following drawings.
Fig 1 shows in a schematic block diagram a system for providing medical imaging data according to an embodiment.
Fig. 2 shows in a schematic block diagram shows data flows and data types in a system according to an embodiment.
Fig. 3 shows schematically different first medical image data which can be transformed by means of a transfer rule according to an embodiment.
Fig. 4 shows a flow chart of a method for providing medical imaging data according to an embodiment.

### DETAILED DESCRIPTION OF EMBODIMENTS

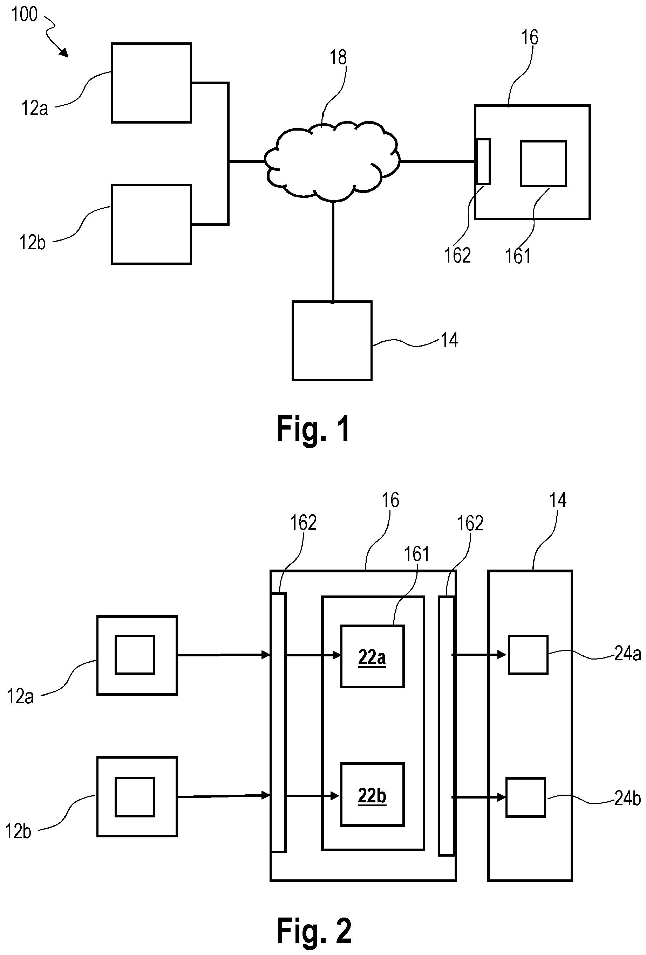

Fig. 1 shows a system 100 that may be implemented in a hospital, or the like. The system 10 comprises at least two modalities 12a and 12b of a same medical imaging technology, wherein the two modalities may, for example, be two X-ray imaging devices that may be of different types or vendors. It is noted that more than two modalities 12 may be provided in the system 100, which may be referred to as a third, fourth, fifth, n-th, n+1-th, etc., modality. It is noted that in this description the designation "a" designating components, images, or the like, relates to the first modality 12a and the designation "b" relates to the second modality 12b. Further, the system 100 comprises an image database 14 for storing medical image data from the modalities 12. Further, the system comprises a medical image processing device 16. The devices 12a, 12b, 14, and 16 may be connected via a data network 18, for example a PACS network.

The image database 14 may be any device adapted for storing a plurality of medical images, i.e. medical image data, in digital form.

The device 16 comprises a data processing unit 161, which may be any suitable microprocessor, CPU, GPU, FPGA, or the like, configured for image (post-)processing. Further, the device 16 comprises at least one data interface 162 that is operatively connected to the data processing unit 161 and configured to receive and/or transmit medical image data via the data network 18.

Fig. 2 shows a data flow and data types in the system 100. First medical image data 20a, e.g. an x-ray image, is acquired by using the first modality 12a, transmitted via the data network 18 and provided to the device 16. Using the first modality 12a of the medical imaging technology for acquiring the first medical image data is associated with at least one modality-specific image characteristic of the first medical image data 12a and at least co-determines an image visualization to a user. Optionally, the first medical image data 20a may be stored in the database 14. At the same time or later, for example minutes, hours, weeks, months or years later, another first medical image data 20b is acquired by using the second modality 12b, transported via the data network 18 and provided to the device 16. Again, using the second modality 12b of the medical imaging technology for acquiring the another first medical image data 20b is associated with at least one modality-specific image characteristic of the another first medical image data 20b and at least co-determines an image visualization to a user. Optionally, the another first medical image data 20b may be stored in the database 14.

Optionally, the at least one image characteristic comprises one or more of a sharpness, a contrast, a noise behavior, a frequency domain, an image histogram, and a grey value representation of the first medical image data 20a, 20b or parts of it.

The data processing unit 161 is configured to obtain the first medical image data 20a acquired by the first modality 12a, e.g. via the data interface 162.

Further, the data processing unit 161 is configured to identify the first modality 12a and determine, based on the identified first modality 12a, a first transfer rule 22a configured to transfer the at least one image characteristic towards a common reference image characteristic associated with a common reference image visualization. For example, identifying the first modality 12a may comprise extracting a modality identifier from meta data of the first medical image data. This may be comprised by a header of the first medical image data and may be provided in suitable data format, such as DICOM.

Likewise, the data processing unit 161 is configured to identify the second modality 12b and determine, based on the identified first modality 12b, a second transfer rule 22b configured to transfer the at least one image characteristic towards a common reference image characteristic associated with a common reference image visualization. For example, identifying the second modality 12b may comprise extracting a modality identifier from meta data of the first medical image data. This may be comprised by a header of the first medical image data and may be provided in suitable data format, such as DICOM.

Optionally, the first transfer rule 22a and/or second transfer rule 22b comprises a set of transfer parameters configured to modify one or more of a sharpness, a contrast, a noise behavior, a frequency domain, and a grey value representation of the first medical image data or parts of it, in order to transfer the at least one image characteristic towards the common reference image characteristic. The respective transfer rule 22a, 22b may be predefined for a specific vendor or type of the corresponding modality 12a, 12b, and may optionally be stored in a database, e.g. database 14, in a look-up table, or the like. The transfer rule 22a, 22b is functionally configured to transfer the at least one image characteristic to the specified reference common to all first medical image data 20a, 20b so that the transferred images have at least a similar visualization, appearance, etc. It is noted that the first transfer rule 22a and the second transfer rule 22b may differ from each other.

Optionally, the transfer rule and/or the set of transfer parameters may be used by the data processing unit 162 to perform an image characteristic transformation, etc. For example, the data processing unit 162 may determine key values k_{1_1}, _{k2_1}, k_{1_2}, k_{2_2} from the first medical image data 20a, 20b and the common reference, e.g. by using a histogram, or the like, in particular two key values k_{1_1}, k_{2_1} for the first medical image data and two key values k_{1_2}, k2_{_2} for the common reference. The key values k_{1_1} and k_{1_2} may be 20% percentile of the respective histogram and the key values k₂_₁ and k_{2_2} may be 80% percentile of the respective histogram.

From the key values k_{1_1}, k_{2_1}, k_{1_2}, k_{2_2} the data processing unit 162 may determine values g_{1_1}, g_{2_1}, g_{1_2}, g_{2_2}, associated with the at least one image characteristic.

For example, if a color is to be transferred to the common reference, the value g_{1_1} is the grey scale value at k_{1_1} and the color value g_{2_1} is the grey scale value at k₂_₁ from the first medical image data. The color value g_{1_2} is the grey scale value at k_{1_2} and the color value g_{2_2} is the grey scale value at k_{2_2} from the first medical image data. The color values g_{1_1}, g_{2_1}, g_{1_2}, g_{2_2} may be different.

From the color values g_{1_1}, g_{2_1}, g_{1_2}, g_{2_2} a color transformation in the form of a look-up table (LUT) may be generated by the data processing unit. The color transformation may be a linear transformation with the properties that g_{1_1} = LUT [g_{1_2}] and g_{2_1} = LUT [g_{2_2}], in such a way, the color values g_{1_2}, g_{2_2} of the common reference are mapped to the respective color values g_{1_1}, g_{2_1} of the first medical image data 20a, 20b.

Further, the data processing unit 161 is configured to generate second medical image data 24a, by processing the first medical image data 20a acquired by the first modality 12a with the first transfer rule 22a. Likewise, the data processing unit 161 is configured to generate another second medical image data 24b, by processing the another first medical image data 20b of the second modality 12b with the second transfer rule 22b. It is noted that the second medical image data 24a and 24b, or generally 24n, 24n+1, etc., have at least a similar visualization, appearance, etc., which in turn is at least similar to the common reference.

Furthermore, the data processing unit 161 is configured to provide the second medical image data 24a, 24b, e.g. to a display, the database 14, etc.

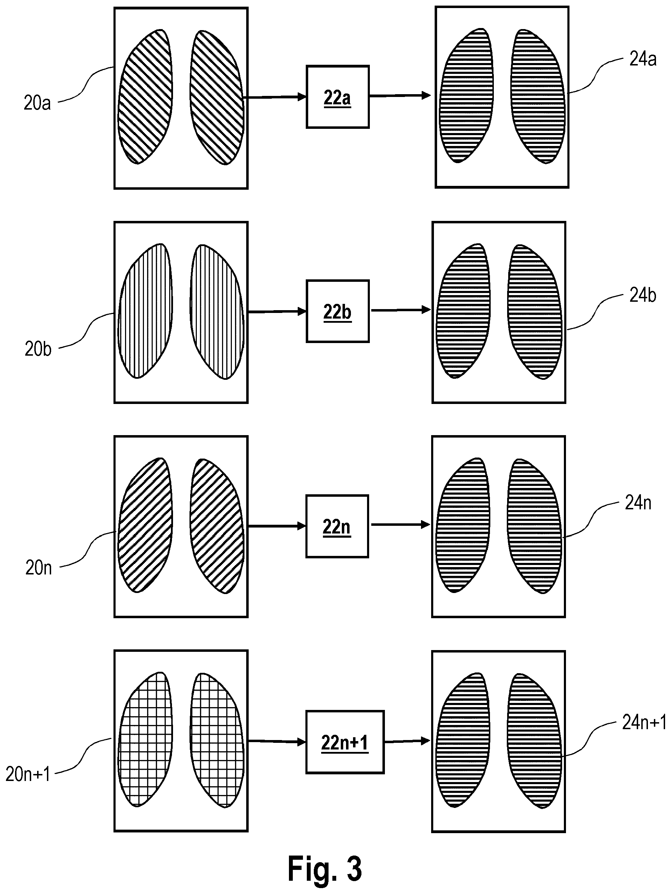

Fig. 3 shows schematically different first medical image data 20a, which is acquired by using the first modality 12a, first medical image data 20b, which is acquired by using the second modality 12b, first medical image data 20n, which is acquired by using an n-th modality 12n, and first medical image data n+1, which acquired by using an n-th+1 modality 12n+1. The first medical image data 20a, 20b, 20n and 20n+1 may differ from each other in at least one image characteristic, as explained above. The first medical image data 20a, 20b, 20n and 20n+1 may be e.g. X-ray images. In Fig. 3, the different at least one image characteristics resulting from using the different modalities 12a, 12b, 12n, 12n+1 are shown only schematically by using different hatchings. As explained above, the at least one image characteristic may be one or more of a sharpness, a contrast, a noise behavior, a frequency domain, and a grey value representation of the first medical image data 20a, 20b, 20n and 20n+1, or parts of it.

By applying, by the data processing unit 162, the corresponding transfer rule 22a, 22b, 22n, 22n+1, to the first medical image data 20a, 20b, 20n and 20n+1, the at least one image characteristic may be modified towards the common reference, meaning that in the resulting second image data 24a, 24b, 24n, 24n+1, the at least one image characteristic is at least similar among all medical images, irrespective of the modality 12a, 12b, 12n, 12n+1 used for acquiring the first medical image data 20a, 20b, 20n and 20n+1. In Fig. 3, the modified image characteristic is shown only schematically by using a hatching common to all second image data 24a, 24b, 24n, 24n+1.

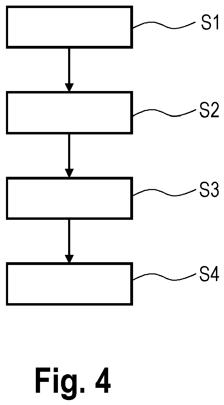

Fig. 4 shows in a flow chart a method for providing medical imaging data. It may be computer-implemented and may be applied to the system 100 as explained above. The method comprises the following steps:

In a step S1, the data processing unit 162 obtains the first medical image data 20a acquired by the first modality 12a, wherein using the first modality 12a is associated with at least one modality-specific image characteristic of the first medical image data 20a at least co-determining an image visualization to a user.

In a step S2, the data processing unit 162 identifies the first modality 12a, and determines, based on the identified first modality 12a, the first transfer rule 22a configured to transfer the at least one image characteristic towards the common reference image characteristic associated with a common reference image visualization.

In a step S3, the data processing unit 162 generates the second medical image data 24a, by processing the first medical image data 20a with the first transfer rule 22a.

In a step S4, the data processing unit 162 provides the second medical image data 24a, e.g. for displaying it to a user and/or for storing in the database 14.

In another exemplary embodiment, a computer program or computer program element is provided that is characterized by being configured to execute the method steps of the method according to one of the preceding embodiments, on an appropriate system.

The computer program element might therefore be stored on a data processing unit, which might also be part of an embodiment. This data processing unit may be configured to perform or induce performing of the steps of the method described above. Moreover, it may be configured to operate the components of the above described device and/or system. The computing unit can be configured to operate automatically and/or to execute the orders of a user. A computer program may be loaded into a working memory of a data processor. The data processor may thus be equipped to carry out the method according to one of the preceding embodiments.

Further, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It is noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and the foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS:

- 100: system
- 12: modality
- 14: database
- 16: device
- 161: data processing unit
- 162:
- 18: data network
- 20: first medical image data
- 22: transfer rule
- 24: second medical image data

## Claims

1. A method for providing medical imaging data, comprising:
obtaining (S1), by a data processing unit (162), first medical image data (20a) acquired by a first modality (12a) of a medical imaging technology, wherein using the first modality (12a) of the medical imaging technology is associated with at least one modality-specific image characteristic of the first medical image data (20a) at least co-determining an image visualization to a user;
identifying (S2), by the data processing unit (162), the first modality of the medical imaging technology, and determining, by the data processing unit (162), based on the identified first modality (12a) of the medical imaging technology, a first transfer rule (22a) configured to transfer the at least one image characteristic towards a common reference image characteristic associated with a common reference image visualization;
generating (S3), by the data processing unit (162), second medical image data (24a), by processing the first medical image data (20a) with the first transfer rule (22a); and
providing (S4), by the data processing unit (162), the second medical image data (24a) to be displayed to a user.

2. The method of claim 1, wherein the first modality (12a) of the medical imaging technology and/or the first transfer rule (22a) is vendor specific and/or type specific.

3. The method of claim 1 or 2, wherein identifying the first modality further comprises:
extracting a modality identifier from meta data of the first medical image data.

4. The method of any one of the preceding claims, wherein the at least one image characteristic comprises one or more of a sharpness, a contrast, a noise behavior, a frequency domain, an image histogram, and a grey value representation of the first medical image data or parts of it.

5. The method of any one of the preceding claims, wherein the first transfer rule comprises a set of transfer parameters configured to modify one or more of a sharpness, a contrast, a noise behavior, a frequency domain, and a grey value representation of the first medical image data or parts of it, in order to transfer the at least one image characteristic towards the common reference image characteristic.

6. The method of any one of the preceding claims, wherein determining the first transfer rule further comprises:
image analyzing of a number of first medical image data, each of which is assigned to the first modality, and determining the at least one image characteristic for each one of the number of first medical image data; and
determining, for each one of the number of first medical image data, a difference between the corresponding one at least one image characteristic and the common reference image characteristic, and generating, based on the determined difference, an individual set of transfer parameters for the first transfer rule for each one of the number of medical image data, wherein the individual set of transfer parameters is configured to transfer the corresponding one of the at least one image characteristic of the number of first medical image data towards the common reference image characteristic.

7. The method of claim 6, wherein the method further comprises:
determining an average or a median of the individual sets of transfer parameters; and
generating the first transfer rule to be specific for the first modality, based on the determined average or median.

8. The method of any one of the preceding claims, wherein the first transfer rule is predefined for the first modality, and wherein determining the first transfer rule further comprises:
searching, within a data source, the first transfer rule assigned to the first modality, based on the identified first modality.

9. The method of any one of the preceding claims, wherein the common reference image characteristic and/or the common reference image visualization is common to the first modality and additionally to at least one second modality of the medical imaging technology used to acquire the first medical image data, wherein the underlying medical imaging technology of the first modality and the second modality is the same, and wherein the second medical image data is generated by processing the first medical image data by a second transfer rule configured to transfer the at least one image characteristic of the first medical image towards the common reference image characteristic associated with the common reference image visualization.

10. The method of any one of the preceding claims, wherein the first medical image data is obtained from an image database (14), preferably from a picture archiving and communication system, PACS, and wherein the second medical image data is provided to the PACS.

11. The method of any one of claims 1 to 9, wherein the first medical image data is obtained from the first modality, and then processed with the first transfer rule to generate the second medical image data, and wherein the second medical image data is provided to an image database (14), preferably a picture archiving and communication system, PACS.

12. The method of any one of the preceding claims, wherein the method is applied to a server arranged between the first modality and an image database (14), preferably a picture archiving and communication system, PACS.

13. A device (16) for providing medical imaging data, comprising:
a data processing unit (162); and
at least one data interface (161); operatively connected to the data processing unit and configured to receive and/or transmit medical image data;
wherein the data processing unit (162) is configured to:
obtain first medical image data acquired by a first modality of a medical imaging technology, wherein using the first modality of the medical imaging technology is associated with at least one modality-specific image characteristic of the first medical image data at least co-determining an image visualization to a user;
identify the first modality of the medical imaging technology, and determining, by the data processing unit, based on the identified first modality of the medical imaging technology, a first transfer rule configured to transfer the at least one image characteristic towards a common reference image characteristic associated with a common reference image visualization;
generate second medical image data, by processing the first medical image data with the first transfer rule; and
provide the second medical image data to be displayed to a user.

14. A medical imaging system (100) for providing medical imaging data, comprising:
at least a first modality (12a) of a medical imaging technology;
an image database (14); and
a device (16) of claim 13.

15. A computer program element, which when executed by a processor is configured to carry out the method of any one of claims 1 to 12, and/or to control a device of claim 13, and/or to control a system of claim 14.
